(19) Europäisches Patentamt
European Patent Office
Office européen des brevets

(11) EP 1 318 175 A1

(12) # EUROPÄISCHE PATENTANMELDUNG

(43) Veröffentlichungstag:
**11.06.2003 Patentblatt 2003/24**

(51) Int Cl.[7]: **C08L 69/00**, C08L 51/04, C08L 25/12

(21) Anmeldenummer: **02025162.5**

(22) Anmeldetag: **11.11.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **04.12.2001 DE 10159316**

(71) Anmelder: **BASF AKTIENGESELLSCHAFT
67056 Ludwigshafen (DE)**

(72) Erfinder:
- **Weber, Martin, Dr.
67487 Maikammer (DE)**
- **Hopfenspirger, Xaver
67454 Hassloch (DE)**
- **Jakobi, Reinhard, Dr.
67133 Maxdorf (DE)**
- **Laun, Martin, Dr.
68199 Mannheim (DE)**
- **Cunningham, Beatrix
69126 Heidelberg (DE)**

(54) **Polycarbonat-Styrolcopolymer-Blends mit verminderter Delaminationsneigung**

(57) Thermoplastische Formmassen, enthaltend

A) 1 bis 98 Gew.-% mindestens eines aromatischen Polycarbonats A mit einer Viskositätszahl $VZ_A$ von 60 bis 63 ml/g,

B) 1 bis 98 Gew.-% mindestens eines Pfropfpolymerisats B aus

b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,

b2) 20 bis 60 Gew.-% einer Pfropfauflage B2 aus

b21) 60 bis 95 Gew.-% Styrol oder substituierten Styrolen B21

b22 5 bis 40 Gew.-% mindestens eines ungesättigten Nitrils B22,

C) 1 bis 98 Gew.-% mindestens eines thermoplastischen Copolymerisats C mit einer Viskositätszahl $VZ_c$ von 90 bis 120 ml/g,

c1) 60 bis 85 Gew.-% Styrol oder substituierten Styrolen C1 und
C2) 15 bis 40 Gew.-% mindestens eines ungesättigten Nitrils C2,

D) 0 bis 25 Gew.-% mindestens eines Füllstoffs D,

E) 0 bis 10 Gew.-% mindestens eines nochmolekularen Copolymers E aus mindestens zwei unterschiedlichen Alkylestern, aromatischen oder Alkylaromatischen Estern der Acrylsäure oder der Methacrylsäure,

F) 0 bis 2 Gew.-% mindestens einer organischen Säure F,

G) 0 bis 25 Gew.-% mindestens einer halogenfreien Phosphorverbindung G,

H) 0 bis 45 Gew.-% weiterer Zusatzstoffe H.

wobei die Formmassen keine Polyphenylenether enthalten.

EP 1 318 175 A1

**Beschreibung**

Die Erfindung betrifft thermoplastische Formmassen, enthaltend die Komponenten A, B und C sowie gegebenenfalls D, E, F, G und H, deren Summe 100 Gew.-% ergibt,

A) 1 bis 98 Gew.-% mindestens eines aromatischen Polycarbonats A mit einer Viskositätszahl $VZ_A$ von 60 bis 63 ml/g, bestimmt nach DIN 53727 an einer 0,5 gew.-%igen Lösung in Methylenchlorid bei 23°C,

B) 1 bis 98 Gew.-% mindestens eines Pfropfpolymerisats B aus

b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,

b2) 20 bis 60 Gew.-% einer Pfropfauflage B2 aus

b21) 60 bis 95 Gew.-% Styrol oder substituierten Styrolen B21 der allgemeinen Formel I

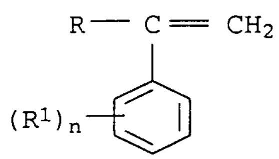

(I)

worin R einen $C_{1-8}$-Alkylrest oder Wasserstoff und $R^1$ einen $C_{1-8}$-Alkylrest bedeutet und n den Wert 1, 2 oder 3 hat, oder deren Mischungen und

b22) 5 bis 40 Gew.-% mindestens eines ungesättigten Nitrils B22,

C) 1 bis 98 Gew.-% mindestens eines thermoplastischen Copolymerisats C mit einer Viskositätszahl $VZ_C$ von 90 bis 120 ml/g, bestimmt nach DIN 53727 an einer 0,5 gew.-igen Lösung in Dimethylformamid bei 23°C,

c1) 60 bis 85 Gew.-% Styrol oder substituierten Styrolen C1 der allgemeinen Formel I oder deren Mischungen und

c2) 15 bis 40 Gew.-% mindestens eines ungesättigten Nitrils C2,

D) 0 bis 25 Gew.-% mindestens eines Füllstoffs D,

E) 0 bis 10 Gew.-% mindestens eines nochmolekularen Copolymers E aus mindestens zwei unterschiedlichen Alkylestern, aromatischen oder Alkylaromatischen Estern der Acrylsäure oder der Methacrylsäure,

F) 0 bis 2 Gew.-% mindestens einer organischen Säure F,

G) 0 bis 25 Gew.-% mindestens einer halogenfreien Phosphorverbindung G,

H) 0 bis 45 Gew.-% weiterer Zusatzstoffe H,

wobei die Formmassen keine Polyphenylenether enthalten.

Weiterhin betrifft die Erfindung ein Verfahren zur Herstellung der Formmassen, die Verwendung der Formmassen zur Herstellung von Formkörpern, Fasern und Folien, sowie diese Formkörper, Fasern und Folien. Schließlich betrifft die Erfindung ein Verfahren zur Verminderung oder Vermeidung der Delamination von Formkörpern.

Polymerblends aus Polycarbonat und Styrolpolymeren, wie beispielsweise ABS (Acrylnitril-Butadien-Styrol-Polymerisate) oder ASA (Acrylnitril-Styrol-Acrylat-Polymerisate) zeichnen sich durch hervorragende mechanische Eigenschaften aus; Einzelheiten findet der Fachmann z.B. in L. Bottenbruch (Hg.), Kunststoff-Handbuch, Band 3/2 "Technische Polymer-Blends", Hanser-Verlag, München 1993. Daher finden diese Formmassen in den verschiedensten Bereichen Verwendung, wie beispielsweise im Automobilbau, im Bausektor, für Büromaschinen, sowie in elektrischen

Geräten und Haushaltsgeräten.

Zur Herstellung großflächiger Formteile ist ein geringer thermischer Ausdehnungskoeffizient (CTE) wünschenswert. Eine Senkung des thermischen Ausdehnungskoeffizienten ist durch Zusatz von Füll- oder Verstärkungsstoffen zu thermoplastischen Formmassen möglich.

Polymerblends können durch Zusatz von - insbesondere halogenfreien - Flammschutzmitteln flammwidrig ausgerüstet werden, so daß die Brandprüfung nach dem Standard UL-94 der Underwriters' Laboratories Inc. (Melville, Long Island, New York 11746, USA) in Bezug auf die Brandzeiten erfüllt wird. Besonders geeignete Flammschutzmittel sind phosphororganische Verbindungen, wie beispielsweise Phosphorester oder Phosphinoxide. Mit diesen Flammschutzmitteln ausgerüstete Formmassen sind aus vielen Patentanmeldungen, wie z.B. den EP-A-Schriften 522 397, 103 230, 174 493, 206 058, 363 608 und 558 266 bekannt.

Weitere Formmassen auf Basis von Polycarbonat und Styrolcopolymeren werden in den DE-A-Schriften 42 11 061, 40 34 336, 42 00 247, 195 40 312, 196 21 733, 199 59 420, 196 26 156, 196 32 675 und 199 59 410 beschrieben.

In den Beispielen DE-A 42 00 247 wird ein Styrol-Acrylnitril-Copolymerisat mit einer Viskositätszahl von 100 ml/g, und ein Polycarbonat mit einer Grenzviskosität von 1,3 ml/g, verwendet. Letztere wurde an einer 0,5 gew.-%igen Lösung in Methylenchlorid bei 23°C gemessen und entspricht einer Viskositätszahl VZ des Polycarbonats von 60 ml/g. Jedoch ist in den Formmassen dieser Schrift Polyphenylenether (PPE) erfindungswesentlich vorhanden, d.h. PPE fehlt in den Vergleichsbeispielen.

Insbesondere für großflächige Formkörper, z.B. Karosserieteile für Kraftfahrzeuge (Kotflügel, Heckklappen, Fronthauben, etc.) müssen die Polymerblends eine hohe Dimensionsbeständigkeit, gute Zähigkeit und hohe Fließfähigkeit aufweisen. Erforderlich ist außerdem eine hohe Oberflächenqualität über das gesamte Formteil hinweg, die auch bei einer Lackierung der Teile erhalten bleibt.

Bei großflächigen Formkörpern aus den genannten Polycarbonat-Styrolcopolymer-Blends beobachtet man in vielen Fällen eine Delamination (Abplatzen von Polymermaterial), insbesondere im Bereich des Angusses.

Bei lackierten Teilen führt die Delamination zu Lackabplatzungen, was das Formteil unbrauchbar macht.

Die in den zum Stand der Technik genannten Dokumenten beschriebenen Formmassen erfüllen zwar jeweils eine oder mehrere der genannten erforderlichen Eigenschaften, jedoch erzielen sie die erforderliche Kombination von hoher Oberflächenqualität und verminderter Neigung zur Delamination in einem nicht für alle Anwendungen ausreichenden Maße.

Es bestand die Aufgabe, den geschilderten Nachteilen abzuhelfen. Insbesondere bestand die Aufgabe, Polycarbonat-Styrolcopolymer-Blends bereitzustellen, die neben guter Dimensionsbeständigkeit, Zähigkeit und Fließfähigkeit zusätzlich eine hohe Qualität der Oberfläche, und eine verminderte Delamination (reduzierte Delaminationsneigung) aufweisen.

Die hohe Oberflächenqualität und die verminderte Delamination sollte über den gesamten Formkörper, insbesondere auch in dessen Angußbereich, gewährleistet sein.

Weiterhin sollte die gute Oberflächenqualität auch nach Lackierung des Formkörpers erhalten bleiben.

Demgemäß wurden die eingangs definierten thermoplastischen Formmassen, deren Herstellungsverfahren und Verwendung zur Herstellung von Formkörpern, Fasern und Folien, sowie diese Formkörper, Fasern und Folien gefunden. Außerdem betrifft die Erfindung ein Verfahren zur Verminderung oder Vermeidung der Delamination von Formkörpern.

Bevorzugte Ausführungsformen sind den Unteransprüchen zu entnehmen.

Von den Formmassen des Standes der Technik unterscheiden sich die erfindungsgemäßen Formmassen insbesondere dadurch, daß sie keine Polyphenylenether enthalten, und dadurch, daß die Viskositätszahlen - und damit die Molekulargewichte - der Komponenten A (Polycarbonat) und C (Copolymerisat aus Styrolverbindung und ungesättigtem Nitril), in ausgewählten, engen und genau definierten Zahlenbereichen liegen. Nur wenn die Viskositätszahlen von A und von C in diesen ausgewählten engen Bereichen liegen, weisen die Formmassen die genannten verbesserten Eigenschaften auf.

Nachstehend werden die bevorzugten Komponenten A bis H erläutert.

Komponente A

Die Komponente A ist in den erfindungsgemäßen Formmassen in einer Menge von 1 bis 98, vorzugsweise 10 bis 95, insbesondere 20 bis 94 Gew.-% enthalten.

Bevorzugt werden als Komponente A halogenfreie Polycarbonate eingesetzt. Geeignete halogenfreie Polycarbonate sind beispielsweise solche auf Basis von Diphenolen der allgemeinen Formel II

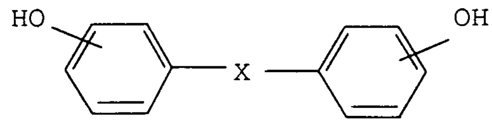

(II)

worin X eine Einfachbindung, eine $C_1$- bis $C_3$-Alkylen-, eine $C_2$-bis $C_3$-Alkyliden-, eine $C_3$- bis $C_6$- Cycloalkylidengruppe, sowie - S- oder -$SO_2$- bedeutet.

Bevorzugte Diphenole der Formel II sind beispielsweise Hydrochinon, Resorcin, 4,4'-Dihydroxyphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolycarbonat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Erfindungsgemäß weisen die aromatischen Polycarbonate A eine Viskositätszahl $VZ_A$ von 60 bis 63 ml/g auf, bestimmt nach DIN 53727 an einer 0,5 gew.-%igen Lösung in Methylenchlorid bei 23°C.

Der genannte Bereich für $VZ_A$ von 60 bis 63 ml/g entspricht relativen Viskositäten $h_{rel}$ von 1,30 bis 1,315, bzw. er entspricht mittleren Molekulargewichten (Gewichtsmittel) $M_w$ von 46.000 bis 50.000 g/mol.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei die jeweils einzustellende Viskositätszahl (und damit das Molekulargewicht) in bekannter Weise durch eine entsprechende Menge an bekannten Kettenabbrechern erzielt wird.

Bezüglich polydiorganosiloxanhaltigen Polycarbonaten siehe beispielsweise DE-A 33 34 782.

Geeignete Kettenabbrecher sind beispielsweise Phenol, p-t-Butylphenol aber auch langkettige Alkylphenole wie 4-(1,3-Tetramethylbutylbutyl)-phenol, gemäß DE-A 28 42 005 oder Monoalkylphenole oder Dialkylphenole mit insgesamt 8 bis 20 C-Atomen in den Alkylsubstituenten gemäß DE-A 35 06 472, wie p-Nonylphenol, 3.5-dit-Butylphenol, p-t-Octylphenol, p-Dodecylphenol, 2-(3,5-dimethylheptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

Komponente B

Die Komponente B ist in den erfindungsgemäßen Formmassen in einer Menge von 1 bis 98, vorzugsweise 1,5 bis 50, insbesondere 2 bis 45 Gew.-% enthalten. Die Komponente B ist vorzugsweise halogenfrei.

Die Pfropfpolymerisate B sind aufgebaut aus

b1) 40 bis 80 Gew.-%, vorzugsweise 50 bis 70 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0 °C,

b2) 20 bis 60 Gew.-%, vorzugsweise 30 bis 50 Gew.-% einer Pfropfauflage B2 aus

b21) 60 bis 95 Gew.-%, bevorzugt 70 bis 85 Gew.-% Styrol oder substituierten Styrolen B21 der allgemeinen Formel I

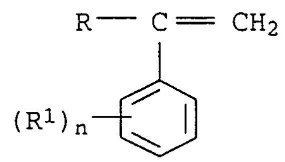

(I)

worin R ein $C_1$- bis $C_8$ Alkylrest, bevorzugt Methyl oder Ethyl oder Wasserstoff bedeutet und $R^1$ einen $C_1$- bis $C_8$- Alkylrest, bevorzugt Methyl oder Ethyl, darstellt und n den Wert 1, 2 oder 3 hat, oder deren Mischungen und

b22) 5 bis 40 Gew.-%, vorzugsweise 15 bis 30 Gew.-% mindestens eines ungesättigten Nitrils B22, bevorzugt Acrylnitril oder Methacrylnitril oder deren Mischungen.

Für die Pfropfgrundlage B1 kommen Polymerisate in Betracht, deren Glasübergangstemperatur unterhalb von 10°C, vorzugsweise unterhalb von 0°C, besonders bevorzugt unterhalb von -20°C liegt. Dies sind z.B. Elastomere auf der Basis von $C_1$- bis $C_8$-Alkylestern der Acrylsäure, die gegebenenfalls weitere Comonomere enthalten können, auf der Basis von Ethylen/Propylen, auf der Basis von Dienen wie Butadien oder auf der Basis von Siloxanen. Als Pfropfkautschuk ergeben sich dann ASA-, AES-, ABS- bzw. Polysiloxankautschuke.

Es versteht sich, daß zur Herstellung der Pfropfgrundlage B1 auch Mischungen der genannten Monomere $C_{1-8}$-Alkylacrylate, Ethylen/Propylen, Diene und Siloxane verwendet werden können.

Geeignete $C_{1-8}$-Alkylacrylate sind insbesondere n-Butylacrylat und 2-Ethylhexylacrylat. Als Diene sind insbesondere Butadien und Isopren geeignet. Geeignete Siloxane sind z.B Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan und Octaphenylcyclotetrasiloxan, siehe die DE-A 197 53 542.

Bevorzugt sind Pfropfgrundlagen B1, die aufgebaut sind aus

b11) 70 bis 99,9 Gew.-%, vorzugsweise von 69 bis 79 Gew.-% mindestens eines Alkylacrylates B11 mit 1 bis 8 C-Atomen im Alkylrest, vorzugsweise n-Butylacrylat und/oder 2-Ethyl-hexylacrylat, insbesondere n-Butylacrylat als alleiniges Alkylacrylat,

b12) 0 bis 30 Gew.-%, insbesondere 20 bis 30 Gew.-% eines weiteren copolymerisierbaren monoethylenisch ungesättigten Monomeren B12 wie Butadien, Isopren, Styrol, Acrylnitril, Methylmethacrylat oder Vinylmethylether oder deren Mischungen,

b13) 0,1 bis 5 Gew.-%, vorzugsweise 1 bis 4 Gew.-% eines copolymerisierbaren, polyfunktionellen, vorzugsweise bi- oder tri-funktionellen, die Vernetzung bewirkenden Monomeren B13,

wobei die Summe von B11, B12 und B13 100 Gew.-% ergibt.

Als solche bi- oder polyfunktionellen Vernetzungsmonomeren B13 eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358.

Von den Pfropfauflagen B2 sind diejenigen bevorzugt, in denen B21 Styrol oder a-Methylstyrol oder deren Mischungen und B22 Acrylnitril oder Methacrylnitril bedeutet. Als bevorzugte Monomeren-Gemische werden vor allem Styrol und Acrylnitril oder a-Methylstyrol und Acrylnitril eingesetzt. Die Pfropfauflagen B2 sind erhältlich durch Copolymerisation der Komponenten B21 und B22 in Gegenwart der Pfropfgrundlagen B1.

Die Pfropfgrundlage B1 der Pfropfpolymerisate B, die aus den Komponenten B11, gegebenenfalls B12 und B13 aufgebaut ist, wird auch als ASA-Kautschuk bezeichnet. Ihre Herstellung ist an sich bekannt und beispielsweise in der DE-A 28 26 925, der DE-A 31 49 358 und der DE-A 34 14 118 beschrieben.

Die Herstellung der Propfpolymerisate B kann beispielsweise nach der in der DE-C 12 60 135 beschriebenen Methode erfolgen.

Der Aufbau der Pfropfauflage (Pfropfhülle) der Propfpolymerisate kann ein- oder zweistufig erfolgen. Im Falle des einstufigen Aufbaus der Pfropfhülle wird ein Gemisch der Monomeren B21 und B22 in dem gewünschten Gew. -Verhältnis im Bereich von 95:5 bis 50:50, vorzugsweise von 90:10 bis 65:35 in Gegenwart des Elastomeren B1, in an

sich bekannter Weise (vgl. z.B. DE-A 28 26 925), vorzugsweise in Emulsion, polymerisiert.

Im Falle eines zweistufigen Aufbaus der Pfropfhülle B2 macht die erste Stufe im allgemeinen 20 bis 70 Gew.-%, vorzugsweise 25 bis 50 Gew.-%, bezogen auf B2, aus. Zu ihrer Herstellung werden vorzugsweise nur Styrol oder substituierte Styrole oder deren Mischungen B21 verwendet. Die zweite Stufe der Pfropfhülle macht im allgemeinen 30 bis 80 Gew.-%, insbesondere 50 bis 75 Gew.-%, jeweils bezogen auf B2, aus. Zu ihrer Herstellung werden bevorzugt Mischungen aus den Monomeren B21 und den Nitrilen B22 im Gewichtsverhältnis B21/B22 von im allgemeinen 90:10 bis 60:40, insbesondere 80:20 bis 70:30 angewendet.

Die Bedingungen der Pfropfpolymerisation werden vorzugsweise so gewählt, daß Teilchengrößen von 50 bis 700 nm ($d_{50}$-Wert der integralen Massenverteilung) resultieren. Maßnahmen hierzu sind bekannt und z.B in der DE-A 28 26 925 beschrieben. Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfpolymerisate mit unterschiedlicher Teilchengröße zu verwenden. Um dies zu erreichen, werden die Teilchen des Kautschuks in bekannter Weise, z.B. durch Agglomeration, vergrößert, so daß der Latex bimodal ($d_{50}$ etwa 50 bis 180 nm und 200 bis 700 nm) aufgebaut ist.

In einer bevorzugten Ausführungsform wird eine Mischung aus zwei Pfropfpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt. Der chemische Aufbau der beiden Pfropfpolymerisate ist vorzugsweise derselbe, obwohl die Hülle des grobteiligen Pfropfpolymerisates insbesondere auch zweistufig aufgebaut werden kann.

Mischungen aus der Komponente A und B, wobei letztere ein grobund ein feinteiliges Pfropfpolymerisat aufweist, sind z.B. in der DE-A 36 15 607 beschrieben. Mischungen aus der Komponente A und B, wobei letztere eine zweistufige Pfropfhülle aufweist, sind aus EP-A-0 111 260 bekannt.

Komponente C

Die Komponente C ist in den erfindungsgemäßen Formmassen in einer Menge von 1 bis 98, vorzugsweise 3,5 bis 50, insbesondere 4 bis 40 Gew.-% enthalten. Sie ist vorzugsweise halogenfrei.

Die Copolymerisate C sind erfindungsgemäß aus

c1) 60 bis 85 Gew.-%, vorzugsweise 70 bis 83 Gew.-% Styrol oder substituierten Styrolen C1 der obigen allgemeinen Formel I oder deren Mischungen und

c2) 15 bis 40 Gew.-%, vorzugsweise 17 bis 30 Gew.-% mindestens eines ungesättigten Nitrils C2, bevorzugt Acrylnitril oder Methacrylnitril oder deren Mischungen

aufgebaut.

Die Copolymerisate C sind harzartig, thermoplastisch und kautschukfrei. Besonders bevorzugte Copolymerisate C sind solche aus Styrol und Acrylnitril, aus a-Methylstyrol und Acrylnitril oder aus Styrol, a-Methylstyrol und Acrylnitril. Es können auch mehrere der beschriebenen Copolymere gleichzeitig eingesetzt werden.

Solche Copolymerisate entstehen häufig bei der Pfropfpolymerisation zur Herstellung der Komponente B als Nebenprodukte, besonders dann, wenn große Mengen Monomere auf kleine Mengen Kautschuk gepfropft werden.

Erfindungsgemäß weisen die Copolymerisate C eine Viskositätszahl $VZ_C$ von 90 bis 120 ml/g auf, bestimmt nach DIN 53727 an einer 0,5 gew.-%igen Lösung in N,N-Dimethylformamid (DMF) bei 23°C.

Der genannte Bereich $VZ_C$ von 90 bis 120 ml/g entspricht mittleren Molekulargewichten (Gewichtsmittel) $M_w$ von 220.000 bis 280.000 g/mol.

Bevorzugt haben die Copolymerisate C eine Viskositätszahl $VZ_C$ von 95 bis 110 ml, bestimmt wie zuvor definiert. Dies entspricht gewichtsmittleren Molekulargewichten $M_w$ von 230.000 bis 260.000 g/mol.

Die Copolymerisate sind an sich bekannt und lassen sich z.B. durch radikalische Polymerisation, insbesondere Emulsions-, Suspensions-, Lösungs-, Masse- und Fällungspolymerisation herstellen. Einzelheiten dieser Verfahren nennt z.B. R. Vieweg und G. Daumiller (Hg.), Kunststoff-Handbuch, Band V "Polystyrol", S. 118ff, Hanser-Verlag, München 1969.

Wie eingangs bereits erwähnt, weisen die erfindungsgemäßen Formmassen das verbesserte vorteilhafte Eigenschaftsprofil - hohe Dimensionsbeständigkeit, gute Zähigkeit, hohe Fließfähigkeit, hohe Oberflächenqualität über das gesamte Formteil auch nach Lackierung, und verminderte Delamination (reduzierte Delaminationsneigung) - nur dann auf, wenn beide Viskositätszahlen $VZ_A$ und $VZ_C$ in den ausgewählten engen Bereichen liegen.

In einer besonders bevorzugten Ausführungsform weisen die erfindungsgemäßen Formmassen eine bestimmte Differenz $\Delta VZ$ der Viskositätszahlen $VZ_A$ und $VZ_C$ auf: besonders bevorzugt beträgt die Differenz VZ der Viskositätszahlen, berechnet nach der Formel

$$\Delta VZ = VZ_C - VZ_A$$

27 bis 60 Einheiten [ml/g], insbesondere 32 bis 40 Einheiten [ml/g].

Dabei sind $VZ_A$ und $VZ_C$ definiert und werden bestimmt wie oben beschrieben, also in verschiedenen Lösungsmitteln (und nicht etwa unter identischen Bedingungen, z.B. im gleichen Lösungsmittel).

Komponente D

Die Komponente D ist in den erfindungsgemäßen Formmassen in einer Menge von 0 bis 25, vorzugsweise 0 bis 20, insbesondere 0 bis 17 Gew.-% enthalten.

Bei der Komponente D handelt es sich um Füllstoffe. Es kommen insbesondere teilchenförmige mineralische Füllstoffe D1 und faserförmige Füllstoffe D2 in Betracht. Man kann teilchenförmige mineralische Füllstoffe D1 alleine, oder faserförmige Füllstoffe D2 alleine, verwenden. Bevorzugt verwendet man jedoch als Komponente D der erfindungsgemäßen Formmassen Mischungen von D1 und D2.

In den Mischungen beträgt der Anteil der Komponente D1 vorzugsweise 5 bis 95 und insbesondere 5 bis 90 Gew.-%, der Anteil der Komponente D2 vorzugsweise 5 bis 95 und insbesondere 10 bis 95 Gew.-%, bezogen auf die Komponente D.

Als teilchenförmige mineralische Füllstoffe D1 eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit oder Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45, bevorzugt weniger als 40 Mikrometer aufweisen und deren sogenanntes Apektverhältnis vorzugsweise im Bereich von 1 bis 25, bevorzugt im Bereich von 2 bis 20 liegt, bestimmt am fertigen Produkt, d.h. in der Regel einem Spritzgußformteil. Das Aspektverhältnis ist das Verhältnis von Teilchendurchmesser zu Dicke (größter Ausdehnung zu kleinster Ausdehnung).

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 Mikrometer beträgt, kann auch mittels Siebanalyse gemessen werden.

Besonders bevorzugt werden als teilchenförmige Füllstoffe D1 Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 Mikrometer und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 Mikrometer und einem Aspektverhältnis von 1,2 bis 20, jeweils bestimmt am fertigen Produkt.

Als Komponente D2 werden faserförmige Füllstoffe wie Kohlenstofffasern, Kaliumtitanat-Whisker, Aramidfasern oder bevorzugt Glasfasern eingesetzt, wobei mindestens 50 Gew.-% der faserförmigen Füllstoffe (Glasfasern) eine Länge von mehr als 50 Mikrometer aufweisen. Die verwendeten (Glas)fasern können vorzugsweise einen Durchmesser von bis zu 25, besonders bevorzugt 5 bis 13 Mikrometer aufweisen. Vorzugsweise weisen mindestens 70 Gew.-% der Glasfasern eine Länge von mehr als 60 Mikrometer auf. Besonders bevorzugt betragt im fertigen Formteil die mittlere Länge der Glasfasern 0,08 bis 0,5 mm. Die Länge der Glasfasern bezieht sich auf ein fertiges Formteil, das beispielsweise nach dem Spritzgießen erhalten wird. Dabei können die Glasfasern den Formmassen bereits in der entsprechend abgelängten Form oder auch in Form von Endlossträngen (Rovings) zugesetzt werden.

Komponente E

Die Komponente E wird in den erfindungsgemäßen Formmassen in einer Menge von 0 bis 10, vorzugsweise 0 bis 5 Gew.-% eingesetzt.

Die hochmolekularen Copolymeren E sind erfindungsgemäß aus mindestens zwei unterschiedlichen Alkylestern, aromatischen oder alkylaromatischen Estern der Acrylsäure oder der Methacrylsäure oder deren Mischungen aufgebaut.

Im allgemeinen haben die Ester 1 bis 10, bevorzugt 1 bis 8 Kohlenstoffatome im Alkylrest. Der Alkylrest kann sowohl linear als auch verzweigt sein. Zu den Alkylresten zählt Methyl, Ethyl, n-Propyl, i-Propyl, n-Butyl, i-Butyl, t-Butyl, n-Pentyl, 2-Ethylhexyl oder Cyclohexyl. Bevorzugt werden Methylmethacrylat, Cyclohexylmethacrylat, n-Butylacrylat oder 2-Ethylhexylacrylat verwendet. Unter den aromatischen Estern sind Ester mit 6 bis 18 Kohlenstoffatomen bevorzugt, darunter insbesondere Phenyl. Besonders bevorzugt werden Copolymere E, die von 70 bis 99, insbesondere von 80 bis 93 Gew.-% Methylmethacrylat und von 1 bis 30, insbesondere von 7 bis 20 Gew.-% n-Butylacrylat enthalten.

Erfindungsgemäß haben die Polymeren E ein hohes Molekulargewicht. In der Regel weisen sie Molekulargewichte (Gewichtsmittelwert $M_w$) von mindestens 1.000.000 g/mol (gemessen mittels Gelpermeationschromatographie in Tetrahydrofuran gegen einen Polystyrolstandard) auf. Bevorzugte Copolymere E haben Molekulargewichte $M_w$ von 1.000.000 g/mol oder darüber, beispielsweise mindestens 1.200.000 g/mol. Im allgemeinen haben die Copolymeren E eine Glasübergangstemperatur im Bereich von 40 bis 125, bevorzugt 70 bis 120°C (bestimmt mittels DSC-Messungen, bei einer Aufheizrate von 10 K/min, zweiter Cyclus nach Aufheizen auf 175°C und Abkühlen auf Raumtemperatur).

Komponente F

Die Komponente F ist in den erfindungsgemäßen Formmassen in einer Menge von 0 bis 2, vorzugsweise 0 bis 1,8, insbesondere 0 (bei Vorliegen 0,1) bis 1,5 Gew.-% enthalten.

Komponente F ist eine - bevorzugt niedermolekulare halogenfreie - organische Säure.

Unter niedermolekular im Sinne der vorliegenden Erfindung werden bis zu mehrkernige, beispielsweise bis zu fünfkernige Verbindungen, insbesondere monomolekulare Verbindungen verstanden.

Die Säuren sind bevorzugt halogenfrei, d.h. enthalten im molekularen Gerüst keine Halogene. Säuren, die geringfügige halogenhaltige Verunreinigungen aufweisen, sind dagegen erfindungsgemäß mit umfaßt. Unter Säuren in Sinne der Erfindung werden auch deren Hydrate verstanden.

Vorteilhafterweise werden Säuren eingesetzt, die bei den Verarbeitungstemperaturen nicht oder nur gering flüchtig sind bzw. bei Temperaturen von bis zu etwa 320°C keine oder nur geringe Zersetzungsneigung zeigen.

Die Säuren können eine, zwei oder mehrere, beispielsweise bis zu zehn Säuregruppen enthalten.

Bevorzugt werden organische Säuren eingesetzt. Es kommen sowohl aromatische als auch aliphatische Säuren in Betracht. Ebenso können aliphatisch-aromatische Säuren verwendet werden. Zu den bevorzugten Säuren zählen Mono-, Di- und Polycarbonsäuren, z.B. Palmitinsäure, Stearinsäure, Benzoesäure und substituierte Benzoesäuren, Isophthalsäure, Terephthalsäure, Trimellithsäure, Sulfonsäuren wie p-Toluolsulfonsäure und aliphatische Sulfonsäuren, Fumarsäure, Zitronensäure, Mandelsäure oder Weinsäure.

Besonders bevorzugt werden Zitronensäure oder p-Toluolsulfonsäure oder deren Mischungen eingesetzt. Beispielsweise kann darin der Gewichtsanteil der Zitronensäure von 1 bis 99, bevorzugt von 10 bis 90 % und der der p-Toluolsulfonsäure entsprechend von 1 bis 99, bevorzugt von 10 bis 90 % betragen.

Komponente G

Komponente G ist in den erfindungsgemäßen Formmassen in einer Menge von 0 bis 25, vorzugsweise 0 bis 20, insbesondere 0 (bei Vorliegen 0,2) bis 15 Gew.-% enthalten.

Komponente G ist eine halogenfreie Phosphorverbindung.

Als Komponente G können alle bekannten üblichen phosphorhaltigen Flammschutzmittel eingesetzt werden. Bevorzugt werden die in der DE-A-40 34 336 und/oder die in der EP-A 0 522 397 aufgeführten Flammschutzmittel eingesetzt. Beispiele sind Tri-(2,6- dimethylphenyl)phosphat, Triphenylphosphat, Tricresylphosphat, Diphenyl-2-ethylcresylphosphat, Diphenyl-cresylphosphat, Tri(isopropylphenyl)phosphat sowie Phosphorsäure-bis-phenyl-(4-phenylphenyl)-ester, Phosphorsäure-phenyl-bis-(4-phenylphenyl)-ester, Phosphorsäure-tris-(4-phenylphenyl)-ester, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-bis-phenyl-(1-phenylethyl)-phenyl)-ester, Phosphorsäurephenyl-bis-(1-phenylethyl)-phenyl)-ester, Phosphorsäuretris-(1-phenylethyl)-phenyl)-ester, Phosphorsäure-bis-phenyl-(1-methyl-1-phenylethyl)-phenyl-ester, Phosphorsäure-phenylbis-(1-methyl-1-phenylethyl)-phenyl-ester, Phosphorsäuretris-((1-methyl-1-phenylethyl)-phenyl)-ester, Phosphorsäurephenyl-bis-(4-(1-phenylethyl)-2,6-dimethylphenyl)-ester, Phosphorsäure-bis-phenyl-2,4-di-benzylphenylester, Phosphorsäure-bis-phenyl-2,4-di(1-phenylethyl)-phenylester und Phosphorsäure-bis-phenyl-2,4-di-(1-methyl-1-phenylethyl)-phenylester. Sie können auch im Gemisch mit Triphenylphosphinoxid oder Tri-(2,6-dimethylphenyl)phosphinoxid eingesetzt werden.

Zudem sind als Flammschutzmittel Resorcinoldiphosphat und entsprechend höhere Oligomere, Hydrochinondiphosphat und entsprechende höhere Oligomere bevorzugt.

Außerdem wird auf die in EP-A-0 103 230, EP-A-0 174 493, EP-A-0 206 058, EP-A-0 363 608 und EP-A-0 558 266 genannten Phosphorverbindungen verwiesen.

Komponente H

Komponente H wird in Mengen von 0 bis 45, vorzugsweise 0 bis 20, insbesondere 0 (bei Vorliegen 0,4) bis

10 Gew.-% eingesetzt.

Komponente H sind weitere Zusatzstoffe.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleitund Entformungsmittel, Flammschutzmittel, Farbstoffe und Pigmente und Weichmacher zu nennen. Deren Anteil beträgt im allgemeinen 0 bis 45, vorzugsweise 0 bis 20, insbesondere 0 (bei Vorliegen 0,2) bis 10 Gew.-%, bezogen auf das Gesamtgewicht der Zusammensetzung.

Pigmente und Farbstoffe sind allgemein in Mengen von 0 bis 4, bevorzugt 0 bis 3,5 und insbesondere 0 (bei Vorliegen 0,5) bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3.Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Weitere geeignete Farbmittel sind z.B. in R. Gächter und H. Müller (Hg.), Plastics Additives Handbook, 4$^{th}$ ed. 1993, Reprint Nov. 1996, Hanser Verlag München, auf S. 647 bis 676 beschrieben.

Außerdem sind fluoreszierende Weißmacher zu nennen, z.B. Bis-benzoxazole, Triazin-phenylcumarine, Benzotriazol-phenylcumarine, Naphthotriazol-phenylcumarine, Bis-(styryl)bisphenyle. Weitere Beispiele nennt das erwähnte Buch von Gächter und Müller (4. Auflage 1993) auf S. 779-785.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Lithium-Halogenide, ggf. in Verbindung mit Kupfer-(I)-Halogeniden, z.B. Chloriden, Bromiden und Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Sterainsäure sowie Dialkylketone, z.B. Distearylketon, eingesetzt werden. Weiterhin können auch Ethylenoxid-Propylenoxid-Copolymere als Gleit- und Entformungsmittel verwendet werden.

Insbesondere vorteilhaft ist der Einsatz von UV- und Wärmestabilisatoren für Polycarbonat und Styrolcopolymere. Beispiele geeigneter Stabilisatoren sind zudem in DE-A-44 19 897 aufgeführt. Weiterhin können Umesterungsinhibitoren, wie Phosphate, Phosphite oder Phosphonite enthalten sein.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung unter Entfernen der Lösungsmittel ist möglich. Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol. Vorzugsweise wird ohne chlorhaltige Lösungsmittel gearbeitet. Das Eindampfen der Lösungsmittelgemische kann beispielsweise in Eindampfextrudern erfolgen.

Das Mischen der beispielsweise trockenen Komponenten A bis C und gegebenenfalls D bis H kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wäßrigen Dispersion isoliert worden sind.

Demnach wurde auch ein Verfahren zur Herstellung der erfindungsgemäßen Formmassen durch Mischen

der trockenen Komponenten A bis C und gegebenenfalls D bis H bei 200 bis 320°C gefunden.

Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgemäßen Formmassen können zur Herstellung von Formkörpern, Fasern und Folien eingesetzt werden. Zudem können sie besonders bevorzugt zur Herstellung von Karosserieteilen eingesetzt werden.

Insbesondere sind die Formmassen zur Herstellung von Karosserieteilen im Automobilsektor geeignet, besonders bevorzugt für großflächige Karosserieaußenteile wie Kotflügel, Heckklappen, Fronthauben, etc.

Die Erfindung betrifft demnach auch entsprechende Formkörper, Fasern oder Folien sowie Karosserieteile.

Die erfindungsgemäßen Formmassen sowie Formkörper, Fasern und Folien zeichnen sich aus durch hohe Dimensionsbeständigkeit, gute Zähigkeit, hohe Fließfähigkeit, hohe Oberflächenqualität über das gesamte Formteil auch nach Lackierung, und verminderte Delamination (reduzierte Delaminationsneigung).

Die Erfindung wird durch die nachfolgenden Beispiele näher erläutert.

Beispiele

Die mittlere Teilchengröße und die Teilchengrößenverteilung wurden aus der integralen Massenverteilung an einer veraschten und mittels Ultraschall dispergierten Probe bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796 bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient $Q = (d_{90}-d_{10})/d_{50}$ stellt ein Maß für die Verteilungsbreite der Teilchengröße dar.

Es wurden folgende Komponenten eingesetzt:

A: Ein handelsübliches Polycarbonat auf der Basis von Bisphenol A mit einer Viskositätszahl $VZ_A$ von 61,3 ml/g, gemessen nach DIN 53727 an einer 0,5 Gew.-%-igen Lösung in Methylenchlorid bei 23°C.

B1: Ein feinteiliges Propfpolymerisat, hergestellt aus

b1) 16 g Butylacrylat und 0,4 g Tricyclodecenylacrylat, die in 150 g Wasser unter Zusatz von 1 g des Natriumsalzes einer $C_{13}$-$C_{18}$-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurde innerhalb von 3 Stunden eine Mischung aus 82 g Butylacrylat und 1,6 g Tricyclodecenylacrylat zu gegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt, und die Teilchengrößenverteilung war eng (Quotient Q = 0,29).

b2) 150 g des nach b1) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung dieser Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die mittlere Teilchengröße 91 nm.

B2: Ein grobteiliges Pfropfpolymerisat, das folgendermaßen hergestellt wurde:

b3) Zu einer Vorlage aus 1,5 g des nach b1) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer $C_{12}$- $C_{18}$-Paraffinsulfonsäure in 25 g Wasser bei 60°C zugegeben. Anschließend wurde 2 Stunden nachpolymerisiert. Der erhaltene Latex des vernetzten Butarylacrylat-Polymerisats hatte einen Feststoffgehalt von 40 %. Die mittlere Teilchengröße (Gewichtsmittel) des Latex wurde zu 430 nm ermittelt, die Teilchengrößenverteilung war eng (Q = 0,1).

b4) 150 g des nach b3) erhaltenen Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

C1 bis C5: Copolymere aus 81 Gew.-% Styrol und 19 Gew.-% Acrylnitril

Die Copolymere wurden hergestellt durch kontinuierliche Lösungspolymerisation, wie es im Kunststoff-Handbuch, Hg. R. Vieweg und G. Daumiller, Band 5 "Polystyrol", Hanser-Verlag, München 1969 auf S. 122-124 beschrieben ist. Die Polymere C1 bis C5 unterschieden sich durch ihre Viskositätszahlen $VZ_C$. Letztere wurden bestimmt nach DIN 53727 an einer 0,5 gew.-%igen Lösung in Dimethylformamid bei 23°C. (Nachfolgend ist mit $M_w$ das gewichtsmittlere Molekulargewicht gemeint, das mittels Gelpermeationschromatographie (Eluent $CHCl_3$) bestimmt wurde.)

C1: $VZ_{C1}$: 72 ml/g, dies entspricht $M_w$ 174.000 g/mol.

C2: $VZ_{C2}$: 80 ml/g, dies entspricht $M_w$ 202.000 g/mol.

C3: $VZ_{C3}$: 87 ml/g, dies entspricht $M_w$ 214.000 g/mol.

C4: $VZ_{C4}$: 100 ml/g, dies entspricht $M_w$ 242.000 g/mol.

C5: $VZ_{C5}$: 124 ml/g, dies entspricht $M_w$ 289.000 g/mol.

D1: Talkum IT-Extra von Norwegian Talc, $d_{10}$ = 1,7 Mikrometer, $d_{90}$ = 10,82 Mikrometer, bestimmt mittels Laserbeugung. Dazu wurde das Talkum in einer Suspensionszelle mit einer Mischung aus 99 Gew.-Teilen entionisiertem Wasser und 1 Gew.-Teil des Tensids CV-K8 (von CV-Chemievertrieb, Hannover) mit einem Magnetrührer (60 $min^{-1}$) suspendiert, der Talkumgehalt der Suspension betrug $1\bullet10^{-4}$ g/ml und der pH-Wert war 8,5.

D2: Glasfaser mit einer Epoxysilan-Schlichte, einem Faserdurchmesser von 10 Mikrometer und einer Stapellänge von 4,5 mm (z.B. PPG 3786 von PPG Industries).

Die Bestimmung der Faserlängen wurde folgendermaßen durchgeführt: die mittlere Länge (Zahlenmittelwert) der Fasern wurde am Glührückstand von Formkörpern bestimmt. Dazu wurde der Glührückstand in Zeiss-Immersionsöl aufgeschwemmt. Um eine Unterscheidung zwischen den Füllstoffpartikeln und den Fasern zu gewährleisten, wurde die Länge von mindestens 100 Fasern manuell bestimmt und daraus der Mittelwert berechnet.

F: Zitronensäure-Hydrat, Reinheit 99 %, von Aldrich.

H: Ein hochmolekularer Mehrkomponentenester mit einer Viskosität von 110 bis 150 mPa*s bei 80°C (Loxiol® G 70S von Henkel).

Herstellung der thermoplastischen Formmassen

Die Komponenten A bis H wurden auf einem Zweiwellenextruder (ZSK 30 von Werner & Pfleiderer) bei 250 bis 280°C gemischt, die Mischung als Strang ausgetragen, gekühlt und granuliert.

Das getrocknete Granulat wurde im Spritzguß bei 260 bis 280°C zu Normkleinstäben, ISO-Prüfkörpern, Platten 60 x 60 x 3 mm und Platten 1200 x 300 x 3 mm verarbeitet. Die Werkzeugoberflächentemperatur betrug in allen Fällen 80°C.

Die Wärmeformbeständigkeit Vicat B der Proben wurde mittels der Vicat-Erweichungstemperatur ermittelt.

Die Vicat-Erweichungstemperatur wurde nach DIN 53 460, Methode B, mit einer Kraft von 49,05 N und einer Temperatursteigerung von 50 K je Stunde an Normkleinstäben ermittelt.

Die Fließfähigkeit der Formmassen wurde als Melt Volume Index (MVI) nach DIN 53 735 bei einer Temperatur von 260°C und 5 kg Belastung bestimmt.

Das Bruchverhalten wurde als Schädigungsarbeit $W_s$ an kleinen Platten 60x60x3 mm mittels des Durchstoßtests nach DIN 53 443 bei -30°C geprüft (Durchstoßarbeit).

Die Kerbschlagzähigkeit $a_K$ wurde nach ISO 179 leA bei 23°C an ISO-Prüfkörpern geprüft.

Die Oberflächenqualität der Probekörper wurde an großen Platten (1200x300x3 mm) visuell beurteilt, wobei folgende Abkürzungen verwendet wurden:

S: Schlieren am gesamten Formteil
SA: Schlieren am Anguß
iO: in Ordnung, d.h. keine Schlieren.

Delaminationstest : die Delaminationsneigung der Formkörper wurde mit einem Delaminationstest geprüft. Dazu wurden aus der großen Platte (1200x300x3 mm) in der Nähe des Angusses durch Aussägen kleine Platten (60x60x3 mm) entnommen. Diese kleinen Platten wurden mit einem Schraubenzieher manuell angeritzt und das erhaltene Erscheinungsbild wurde qualitativ beurteilt. Dabei bedeuten:

D: Delamination, d.h. Material platzte ab
iO: in Ordnung, d.h. keine Abplatzungen von Material.

Dampfstrahltest: lackierte Probekörper wurden mit einem Dampfstrahltest auf Delaminiation geprüft. Dazu wurden wiederum aus der großen Platte (1200x300x3 mm) in der Nähe des Angusses kleine Platten (60x60x3 mm) ausgesägt. Diese kleinen Platten wurden mit einem off-line Lacksystem (Primer 78566, Basislack 75803 und Klarlack 76562, alle von Fa. Wörwag, Stuttgart) in üblicher Weise lackiert. Der Dampfstrahltest erfolgte nach der DaimlerChrysler-Norm DBL 5416, indem zunächst die lackierten kleinen Platten mit einem Schraubenzieher kreuzförmig angeritzt wurden. Der auf diese Weise eingebrachte Riss ging durch die Lackschicht hindurch bis in das Kunststoff Substrat hinein. Danach wurde mit einem Dampfstrahlgerät ein fächerförmiger Wasserstrahl von 60°C Wassertemperatur und 60 bar Wasserdruck 60 sec lang auf den Riss gerichtet. Der Abstand zwischen der lackierten Platte und dem Düsenkopf des Dampfstrahlgerätes betrug 10 cm. Der Test galt als bestanden, wenn die durch die Einwirkung des Wasserstrahls verursachte seitliche Ausweitung des Risses in jede Richtung kleiner als 1 mm war. Es bedeuten:

D: Delamination von 1 mm oder mehr, d.h. Material und/oder Lack platzte ab
iO: in Ordnung, d.h. keine Abplatzungen von Material und Lack, oder kleiner als 1 mm.

Die Zusammensetzungen und Eigenschaften oder Formmassen sind der nachfolgenden Tabellen zu entnehmen. V bedeutet zum Vergleich,-bedeutet nicht vorhanden bzw. nicht bestimmt. Berechnetes

$$\Delta VZ = VZ_C - VZ_A.$$

Tabelle 1:

| Zusammensetzung der Formmassen [Gew.-%] | | | | | | | | | |
|---|---|---|---|---|---|---|---|---|---|
| Beispiel → | V1 | V2 | V3 | 4 | V5 | V6 | 7 | V8 | 9 |
| A | 60 | 60 | 60 | 60 | 60 | 60 | 60 | 60 | 60 |
| B1 | 7,5 | 7,5 | 7,5 | 7,5 | 7,5 | 10 | 10 | - | - |
| B2 | 7,5 | 7,5 | 7,5 | 7,5 | 7,5 | 10 | 10 | 15 | 15 |
| C1 | 24,5 | - | - | - | - | 9,3 | - | 24,5 | - |
| C2 | - | 24,5 | - | - | - | - | - | - | - |
| C3 | - | - | 24,5 | - | - | - | - | - | - |

Tabelle 1: (fortgesetzt)

| Zusammensetzung der Formmassen [Gew.-%] | | | | | | | | | |
|---|---|---|---|---|---|---|---|---|---|
| Beispiel → | V1 | V2 | V3 | 4 | V5 | V6 | 7 | V8 | 9 |
| C4 | - | - | - | 24,5 | - | - | 9,3 | - | 24,5 |
| C5 | - | - | - | - | 24,5 | - | - | - | - |
| D1 | - | - | - | - | - | 9,5 | 9,5 | - | - |
| D2 | - | - | - | - | - | 0,5 | 0,5 | - | - |
| F | - | - | - | - | - | 0,2 | 0,2 | - | - |
| H | 0,5 | 0,5 | 0,5 | 0,5 | 0,5 | 0,5 | 0,5 | 0,5 | 0,5 |
| ΔVZ | 10,7 | 18,7 | 25,7 | 38,7 | 62,7 | 10,7 | 38,7 | 10,7 | 38,7 |

Tabelle 2:

| Eigenschaften der Formmassen | | | | | | | | | |
|---|---|---|---|---|---|---|---|---|---|
| Beispiel | V1 | V2 | V3 | 4 | V5 | V6 | 7 | V8 | 9 |
| Vicat B [°C] | 121 | 121 | 121 | 121 | 121 | 127 | 127 | 121 | 121 |
| Durchstoßarbeit $W_S$ bei-30°C [Nm] | 28 | 31 | 33 | 49 | 35 | 51 | 59 | 41 | 43 |
| MVI [ml/10 min] | 19 | 19 | 18 | 17 | 9 | 11 | 10 | 19 | 18 |
| Kerbschlagzähig-keit $a_K$[kJ/$m^2$] | 67 | 66 | 64 | 68 | 56 | 32 | 34 | 64 | 66 |
| Oberflächenqualität | SA | SA | iO | iO | iO | iO | iO | SA | iO |
| Deliminationstest | D | D | D | iO | iO | D | iO | D | iO |
| Dampfstrahltest | - | - | D | iO | iO | D | iO | D | iO |

Die Beispiele V1 bis V5 betreffen ungefüllte Formmassen enthaltend je eines oder Copolymere C1 bis C5; ansonsten war die Zusammensetzung identisch. Bei nicht erfindungsgemäßer Verwendung von Styrol-Acrylnitril-Copolymeren mit Viskositätszahlen $VZ_C$ unter 90 ml/g (Komponenten C1 bis C3 mit $VZ_C$ von 72 bis 87 ml/g, Vergleichsbeispielen V1 bis V3) war die Durchstoßarbeit $W_S$ mit etwa 30 Nm vergleichsweise gering, und die Oberflächenqualität mangelhaft bzw. der Delaminationstest und der Dampfstrahltest wurden nicht bestanden.

Verwendete man hingegen erfindungsgemäß Styrol-Acrylnitril-Copolymere C4 mit $VZ_C$ von 90 bis 120 ml/g (hier: Beispiel 4 mit $VZ_A$ 100 ml/g), war die Durchstoßarbeit $W_S$ 49 Nm, also deutlich verbessert. Außerdem war die Oberflächenqualität gut und sowohl Delaminationstest als auch Dampfstrahltest wurden bestanden (keine Delamination).

Bei nicht erfindungsgemäßer Verwendung eines Copolymeren C5 im mit $VZ_C$ über 120 ml/g (hier: Vergleichsbeispiel V5 mit $VZ_C$ 124 ml/g) war zwar die Oberfläche in Ordnung und die Delaminations -und Dampfstrahlstests wurden bestanden, jedoch waren die mechanischen Eigenschaften deutlich verschlechtert: Durchstoßarbeit $W_S$ 35 statt erfindungsgemäß 49 Nm, Kerbschlagzähigkeit 56 statt erfindungsgemäß 68 kJ/$m^2$. Außerdem sank die Fließfähigkeit stark ab: MVI 9 statt erfindungsgemäß 17 ml/10 min.

Die Beispiele V6 und 7 betreffen füllstoffhaltige Formmassen, die sich ebenfalls in der Komponente C unterschieden. Die nicht erfindungsgemäße Verwendung von C1 mit $VZ_C$ 72 ml/g, Vergleichsbeispiel V6, ergab schlechtere mechanische Eigenschaften und Delaminations -und Dampfstrahltests wurden nicht bestanden. Dagegen wiesen erfindungsgemäße Formmassen, Beispiel 7, enthaltend C4, verbesserte mechanische Eigenschaften auf: $W_S$ 59 statt 51 Nm, und sie bestanden die Delaminations- und Dampfstrahltests.

Die Beispiele V8 und 9 betreffen Formmassen, die im Gegensatz zu den Beispielen V1 bis 7 nur grobteiliges Pfropfpolymerisat B2 (anstelle von fein - und grobteiligem Pfropfcopolymerisaten) enthielten. Wiederum unterschieden sich die Beispiel V8 und 9 nur in der Komponente C. Verwendete man nicht erfindungsgemäß C1 mit $VZ_A$ 72 ml/g, war die Oberfläche mangelhaft, und die Delaminationsund Dampfstrahltests wurden nicht bestanden. Vergleichsbeispiel V8. Bei erfindungsgemäßer Verwendung von C4 mit $VZ_A$ 100 ml/g erhielt man eine gute Oberflächenqualität, und beide Tests wurden bestanden.

Die Beispiele zeigen, daß nur die erfindungsgemäße Zusammensetzung das vorteilhafte, verbesserte Eigenschaftsprofil der Formmassen gewährleistet.

## Patentansprüche

1. Thermoplastische Formmassen, enthaltend die Komponenten A, B und C sowie gegebenenfalls D, E, F, G und H, deren Summe 100 Gew.-% ergibt,

A) 1 bis 98 Gew.-% mindestens eines aromatischen Polycarbonats A mit einer Viskositätszahl $VZ_A$ von 60 bis 63 ml/g, bestimmt nach DIN 53727 an einer 0,5 gew.-%igen Lösung in Methylenchlorid bei 23°C,

B) 1 bis 98 Gew.-% mindestens eines Pfropfpolymerisats B aus

b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,

b2) 20 bis 60 Gew.-% einer Pfropfauflage B2 aus

b21) 60 bis 95 Gew.-% Styrol oder substituierten Styrolen B21 der allgemeinen Formel I

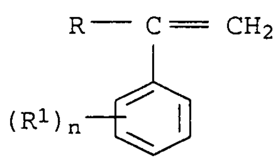

(I)

worin R einen $C_{1-8}$-Alkylrest oder Wasserstoff und $R^1$ einen $C_{1-8}$-Alkylrest bedeutet und n den Wert 1, 2 oder 3 hat, oder deren Mischungen und

b22) 5 bis 40 Gew.-% mindestens eines ungesättigten Nitrils B22,

C) 1 bis 98 Gew.-% mindestens eines thermoplastischen Copolymerisats C mit einer Viskositätszahl $VZ_C$ von 90 bis 120 ml/g, bestimmt nach DIN 53727 an einer 0,5 gew.-igen Lösung in Dimethylformamid bei 23°C,

c1) 60 bis 85 Gew.-% Styrol oder substituierten Styrolen C1 der allgemeinen Formel I oder deren Mischungen und
c2) 15 bis 40 Gew.-% mindestens eines ungesättigten Nitrils C2,

D) 0 bis 25 Gew.-% mindestens eines Füllstoffs D,

E) 0 bis 10 Gew.-% mindestens eines hochmolekularen Copolymers E aus mindestens zwei unterschiedlichen Alkylestern, aromatischen oder Alkylaromatischen Estern der Acrylsäure oder der Methacrylsäure,

F) 0 bis 2 Gew.-% mindestens einer organischen Säure F,

G) 0 bis 25 Gew.-% mindestens einer halogenfreien Phosphorverbindung G,

H) 0 bis 45 Gew.-% weiterer Zusatzstoffe H,

wobei die Formmassen keine Polyphenylenether enthalten.

2. Formmassen nach Anspruch 1, wobei die Viskositätszahl $VZ_C$ des Copolymerisats C 95 bis 110 ml/g beträgt.

3. Formmassen nach den Ansprüchen 1 bis 2, wobei die Differenz $\Delta VZ$ der Viskositätszahlen, $VZ_A$ und $VZ_C$, berechnet nach der Gleichung $\Delta VZ = VZ_C - VZ_A$ , 27 bis 60 Einheiten [ml/g] beträgt.

**4.** Formmassen nach den Ansprüchen 1 bis 3, wobei die Polycarbonate A auf Diphenolen der allgemeinen Formel II

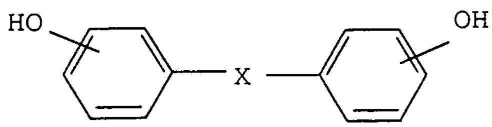

(II)

basieren, worin X eine Einfachbindung, eine $C_{1-3}$-Alkylen-, eine $C_2$-$C_3$-Alkyliden-, eine $C_{3-6}$-Cycloalkyliden-Gruppe, sowie - S- oder -$SO_2$- bedeutet.

**5.** Formmassen nach den Ansprüchen 1 bis 4, wobei die Pfropfgrundlage B1 des Pfropfcopolymerisats B aufgebaut ist aus

b11) 70 bis 99,9 Gew.-% mindestens eines Alkylacrylates B11 mit 1 bis 8 C-Atomen im Alkylrest,

b12) 0 bis 30 Gew.-% eines weiteren copolymerisierbaren monoethylenisch ungesättigten Monomeren B12 oder deren Mischungen, und

b13) 0,1 bis 5 Gew.-% eines copolymerisierbaren, polyfunktionellen, die Vernetzung bewirkenden Monomeren B13,

wobei die Gesamtmenge der Komponenten B11, B12 und B13 100 Gew.-% ergibt.

**6.** Formmassen nach den Ansprüchen 1 bis 5, wobei das Copolymerisat C aus 70 bis 83 Gew.-% Styrol und 17 bis 30 Gew.-% Acrylnitril aufgebaut ist.

**7.** Formmassen nach den Ansprüchen 1 bis 6, wobei der Füllstoff D ausgewählt ist aus teilchenförmigen mineralischen Füllstoffen, faserförmigen Füllstoffen oder deren Mischungen.

**8.** Verfahren zur Herstellung von Formmassen nach den Ansprüchen 1 bis 7 durch Mischen der trockenen Komponenten A bis C und gegebenenfalls D bis H bei 200 bis 320°C.

**9.** Verwendung von Formmassen nach dem Ansprüchen 1 bis 7 zur Herstellung von Formkörpern, Fasern und Folien.

**10.** Verwendung nach Anspruch 9 zur Herstellung von Karosserieteilen.

**11.** Formkörper, Fasern und Folien aus einer Formmasse gemäß den Ansprüchen 1 bis 7.

**12.** Formkörper nach Anspruch 11 in Form von Karosserieteilen.

**13.** Verfahren zur Verminderung oder Vermeidung der Delamination von Formkörpern aus Formmassen enthaltend Polycarbonate, Pfropfpolymerisate und Styrolcopolymerisate, **dadurch gekennzeichnet, daß** man zur Herstellung der Formkörper die Formmassen gemäß den Ansprüchen 1 bis 7 verwendet.

Europäisches Patentamt

# EUROPÄISCHER RECHERCHENBERICHT

Nummer der Anmeldung
EP 02 02 5162

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | DE 199 59 420 A (BASF AG)<br>13. Juni 2001 (2001-06-13)<br>* Beispiele *<br>* Seite 5, Zeile 15 - Zeile 18 *<br>* Ansprüche *<br>--- | 1-13 | C08L69/00<br>C08L51/04<br>C08L25/12 |
| X | DE 198 46 202 A (BASF AG)<br>13. April 2000 (2000-04-13)<br>* Seite 6, Zeile 29 - Zeile 39 *<br>* Beispiele *<br>* Ansprüche 1-5,10 *<br>--- | 1-9,11, 13 | |
| X | EP 0 244 856 A (BASF AG)<br>11. November 1987 (1987-11-11)<br>* Spalte 7, Zeile 17 - Zeile 30 *<br>* Beispiele *<br>--- | 1-13 | |
| D,X | DE 196 21 733 A (BASF AG)<br>4. Dezember 1997 (1997-12-04)<br>* Seite 6, Zeilen 35-43; Anspruch 7 *<br>* Beispiele *<br>* Ansprüche *<br>--- | 1-13 | RECHERCHIERTE SACHGEBIETE (Int.Cl.7)<br>C08L |
| X,D | DE 42 00 247 A (BASF AG)<br>15. Juli 1993 (1993-07-15)<br>* Vergleichsbeispiele V1 und V2 *<br>--- | 1-13 | |
| D,A | EP 0 483 628 A (BASF AG)<br>6. Mai 1992 (1992-05-06)<br>* Seite 7, Zeile 29 - Zeile 46 *<br>* Beispiele *<br>* Ansprüche *<br>----- | 1-13 | |

Der vorliegende Recherchenbericht wurde für alle Patentansprüche erstellt

| Recherchenort | Abschlußdatum der Recherche | Prüfer |
|---|---|---|
| MÜNCHEN | 18. Dezember 2002 | Russell, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 02 5162

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-12-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 19959420 | A | 13-06-2001 | DE | 19959420 A1 | 13-06-2001 |
| | | | WO | 0142361 A2 | 14-06-2001 |
| DE 19846202 | A | 13-04-2000 | DE | 19846202 A1 | 13-04-2000 |
| | | | WO | 0020505 A1 | 13-04-2000 |
| EP 0244856 | A | 11-11-1987 | DE | 3615607 A1 | 12-11-1987 |
| | | | DE | 3765993 D1 | 13-12-1990 |
| | | | EP | 0244856 A1 | 11-11-1987 |
| | | | US | 4880875 A | 14-11-1989 |
| DE 19621733 | A | 04-12-1997 | DE | 19621733 A1 | 04-12-1997 |
| | | | WO | 9745484 A1 | 04-12-1997 |
| | | | EP | 0902810 A1 | 24-03-1999 |
| | | | KR | 2000016155 A | 25-03-2000 |
| | | | US | 6174958 B1 | 16-01-2001 |
| DE 4200247 | A | 15-07-1993 | DE | 4200247 A1 | 15-07-1993 |
| EP 0483628 | A | 06-05-1992 | DE | 4034336 A1 | 30-04-1992 |
| | | | DE | 4100192 A1 | 09-07-1992 |
| | | | DE | 4115607 A1 | 19-11-1992 |
| | | | DE | 59107857 D1 | 04-07-1996 |
| | | | EP | 0483628 A2 | 06-05-1992 |

EPO FORM P0461

Für nähere Einzelheiten zu diesem Anhang : siehe Amtsblatt des Europäischen Patentamts, Nr.12/82